# EUROPEAN PATENT SPECIFICATION

(11) **EP 2 347 041 B1**
(45) Date of publication and mention of the grant of the patent: **08.05.2013**
(21) Application number: 09752869.9
(22) Date of filing: 20.11.2009
(51) Int. Cl.: D01F 6/04, D01D 5/04

(54) **GEL SPUN POLYETHYLENE FIBER**
GELGESPONNENE POLYETHYLENFASER
FIBRE DE POLYÉTHYLÈNE FILÉE À L'ÉTAT DE GEL

(30) Priority: 20.11.2008 EP 08020226
(43) Date of publication of application: 27.07.2011
(73) Proprietor: DSM IP Assets B.V., 6411 TE Heerlen (NL)
(72) Inventor: SIMMELINK, Joseph Arnold Paul Maria, B-B 3650 Dilsen-Stokkem (BE)
(74) Representative: Dekker, Henrike Cornelie Christine
(86) International application number: PCT/EP2009/065564
(87) International publication number: WO 2010/057982

(56) References cited:
- WO-A-2004/053212
- WO-A-2008/116613
- WO-A-2008/131925
- US-A1- 2007 154 707
- TZOU D L ET AL: "Solid-state n.m.r. studies of crystalline phases in gel-spun ultrahigh molecular weight polyethylene" POLYMER, ELSEVIER SCIENCE PUBLISHERS B.V, GB, vol. 35, no. 22, 1 October 1994 (1994-10-01), pages 4728-4733, XP024122078 ISSN: 0032-3861 [retrieved on 1994-10-01]

## Description

The present invention relates to a gel-spun ultrahigh molecular weight polyethylene (UHMWPE) fiber and to a method for producing thereof. The invention also relates to various articles, e.g. ropes, nets and composites comprising the UHMWPE fibers.

A gel - spun UHMWPE fiber is usually prepared by spinning a solution of UHMWPE molecules in a spinning solvent to form a fluid fiber, cooling the fluid fiber to a gel state to form a gel fiber and then removing the spinning solvent to form a solid fiber. The UHMWPE fiber in one or all states, i.e. fluid, gel and/or solid, may be drawn to a state wherein the UHMWPE molecules within the fiber align into highly oriented domains. Examples of drawn gel-spun UHMWPE fibers and of gel-spinning process for obtaining thereof are described for instance in EP 1,137,828 B1; WO 2005/066,401, WO2008/131925, EP 1,193,335; US 6,958,187; and US 6,969,553.

The known gel-spinning processes produce UHMWPE fibers wherein the UHMWPE molecules within said fiber consist of one or more oriented parts, one or more mobile parts and one or more parts present at the interface between the oriented and the mobile parts. Accordingly, the known UHMWPE fibers have a composition comprising an oriented fraction (also called crystalline fraction) consisting of the oriented part(s) of the UHMWPE molecules; an un-oriented fraction (also called amorphous fraction) consisting of the mobile part(s) of the UHMWPE molecules; and an interface fraction consisting of the part(s) of the UHMWPE molecules at the interface thereinbetween. NMR Studies of crystalline phases in gel-spun ultrahigh molecular weight polyethylene have been reported by Tzou et al. in Polymer, Vol 35 (22), p 4728-4733.

It is known that the mechanical properties of a UHMWPE fiber are influenced by the ratio between its crystalline fraction and its amorphous fraction, this ratio being adjusted by drawing the fiber to different extents. By drawing the UHMWPE fiber, more and/or longer parts of UHMWPE molecules from the amorphous fraction are aligned and an increase in the crystalline fraction of said fiber is obtained. It was observed that said increase leads to an UHMWPE fiber with improved mechanical properties, e.g. tensile strength and modulus.

However, the known gel-spinning processes not always decrease the amount of the interface fraction and/or influence the molecular structure of the ordered fraction and therefore, such processes can improve the mechanical properties of an UHMWPE fiber only up to a certain extent. Furthermore, the said known processes can only produce UHMWPE fibers having fixed properties and therefore, the known processes lack versatility when aiming to produce fibers having various combinations of mechanical and physical properties.

There is further a need for a gel-spinning process able to influence the molecular structure of the ordered fraction of an UHMWPE fiber by decreasing the structure defects occurring therein. Such structure defects, as for example chain-folds, loops, entanglements and kinks in the zigzag UHMWPE molecules have detrimental effects on fibers' physical and mechanical properties. There is therefore a need for an UHMWPE fiber having fewer structure defects in the molecular structure of its ordered fraction.

Also, there is a need to improve the overall process for making UHMWPE fiber by increasing process stability. In particular it is desired to reduce yarn breakage, while maintaining optimal yarn properties, such as homogenity.

The invention now provides a gel-spinning process of producing UHMWPE fibers, said process comprising the steps of:
a) feeding a slurry containing UHMWPE and a spinning solvent to an extruder;
b) converting the slurry in the extruder into a solution of UHMWPE in the spinning solvent;
c) spinning fluid UHMWPE fibers by passing the solution of step b) through a spinning plate containing a plurality of spin holes;
d) cooling the fluid UHMWPE fibers to form gel UHMWPE fibers;
e) removing at least partly the spinning solvent from the gel UHMWPE fibers; and
f) drawing the UHMWPE fibers in at least one drawing step before, during and/or after removing the spin solvent;
characterised in that the spinning plate has at most 6 spin holes per cm².

It was surprisingly found that with the inventive process, UHMWPE fibers with improved compositions can be obtained and in particular, the amount of the interfacial fraction of the obtained UHMWPE fibers can be reduced. Moreover, said process allows the manufacturing of UHMWPE fibers wherein the ordered fraction has a molecular structure containing fewer defects than known gel-spun UHMWPE fibers.

It was also surprisingly found that the process of the invention is more versatile, in that it allows the manufacturing of UHMWPE fibers having a broader combination of mechanical properties. It was also found that the inventive process is more robust, in that the number of fiber breakages is reduced, said inventive process being able to be run for longer periods of time than known processes. Hence, the productivity of the inventive process is increased.

A further advantage of the inventive process is that a UHMWPE fiber obtained thereof presents also a crystalline fraction having less structure defects.

According to the inventive process, at step e) the formed gel UHMWPE fibers are subjected to a solvent removal step wherein the spinning solvent is at least partly removed to form solid UHMWPE fibers. Preferably, the solvent is removed from the gel UHMWPE fibers at a rate of at least 0.005 (kg of solvent)/(sec × kg of UHMWPE), more preferably at least 0.01 (kg of solvent)/(sec × kg of UHMWPE), most preferably at least 0.05 (kg of solvent)/(sec × kg of UHMWPE), such as at least 0.1 (kg of solvent)/(sec × kg of UHMWPE). It was observed that when the spinning solvent is removed faster from the gel UHMWPE fibers, the amount of the interfacial fraction of the UHMWPE fibers is further reduced. The maximum solvent removal rate may be determined by standard experiments. Typically, it is preferred that the maximum solvent removal rate in step e) is 0.5 (kg of solvent)/(sec × kg of UHMWPE), more preferably the maximum solvent removal rate is 0.2 (kg of solvent)/(sec × kg of UHMWPE) as a higher solvent removal rate in some cases may lead to a decrease in properties.

The amount of residual spinning solvent, hereafter residual solvent, left in the solid UHMWPE fibers after the solvent removal step e) may vary within large limits and is preferably at most 15 mass% of the initial amount of solvent in the UHMWPE solution at step b) of the inventive process, more preferably at most 10 mass%, even more preferably at most 5 mass%, most preferably at most 1 mass%. It was observed that when the spinning solvent is removed to a larger extent from the gel UHMWPE fibers, the amount of structure defects in the ordered fraction of the solid UHMWPE fibers is reduced. The preferred amount of residual solvent depends on the type of handling of the fibers after step e). If manual handling is required, then very low amounts, such as less than 2 mass% or preferably less than 1 mass% or even less than 0.5 mass%, is highly preferably from a working environmental perspective. If the handling of the fiber is automated (for example in an inline apparatus), preferably in a concealed room, then higher amounts of residual solvent such as for example 5 mass%, 10 mass%, 15 mass% or in special cases even higher, may be advantageous.

The solvent removal process at step e) of the inventive process may be performed by known methods, for example by evaporation when a relatively volatile spinning solvent, e.g. decaline, is used to prepare the UHMWPE solution. To increase the rate of the evaporation of the spinning solvent, the evaporation is preferably carried out in an oven at temperatures between 90 and 150°C, more preferably between 100 and 140°C, most preferably between 110 and 135°C.

Preferably, the evaporation is carried out in an oven provided with nozzles to create a jet of gas, e.g. jet of air, N₂, Ar, or mixtures thereof, that is incident on the fibers. Preferably, the jet of gas is substantially perpendicular on the fibers. Good results were obtained when the gas velocity is at least 0.2 m/s, preferably at least 0.5 m/s, more preferably at least 1.0 m/s.

In a preferred embodiment, the evaporation is carried out in a drawing oven while drawing the gel fiber and/or the forming solid fiber with a draw ratio of at least 2, more preferably at least 3, most preferably at least 4. It was observed that the mechanical properties of the intermediate UHMWPE fibers obtained at this stage, i.e. before drawing the formed solid fibers, were improved as compared with the intermediate UHMWPE fibers obtained with known processes.

A further possibility of solvent removal is by using an extraction liquid in case of a non-volatile or poorly volatile spinning solvent, e.g. paraffin. A combination of both methods, i.e. evaporation and extraction may also be used, in particular when mixtures of volatiles with non-volatiles solvents are used for spinning. Suitable extraction liquids are liquids that do not cause significant changes to the UHMWPE network structure of the UHMWPE gel fibers, for example ethanol, ether, acetone, cyclohexanone, 2-methylpentanone, n-hexane, dichloromethane, trichlorotrifluoroethane, diethyl ether and dioxane or mixtures thereof. Preferably, the extraction liquid is chosen such that the spinning solvent can be separated from the extraction liquid for recycling. To increase the rate of spinning solvent extraction, preferably the temperature of the extraction liquid is between 0 and 60°C, more preferably between 10 and 50°C, most preferably between 20 and 40°C. More preferably, a mixture of extraction liquids that extract faster with extraction liquids that extract slower is used, suitable examples thereof being ethanol and acetone, mixtures thereof and mixtures comprising at least one of these. It was found that the use of such mixtures in a gel-spinning process also decreases the number of structure defects in the interfacial fraction of the UHMWPE fiber obtained thereof. Preferable, a stream of extracting liquids is used, the stream having a velocity of preferably 0.1 m/s, more preferably at least 1 m/s, most preferably at least 4 m/s.

Preferably, in the inventive process a spinning plate is used having at most 6, more preferably at most 5, even more preferably at most 2, and most preferably at most 1 spin hole per cm². The invention also relates to such a spinning plate and to its use in a spinning process for producing polymeric fibers. An advantage of such a spinning plate is that a spinning process using thereof produces fibers and in particular UHMWPE fibers with improved composition, e.g. decreased amount of interface fraction and/or fewer defects in the ordered fraction, and properties. It was furthermore observed that said process is more versatile and robust and produces more homogeneous fibers.

Preferably, said spinning plate has at least 0.1 spin holes per cm², more preferably at least 0.5. Preferably, the spin holes of the spin plate are distributed over the entire surface of the spin plate, more preferably they are evenly distributed. It was found that the use of such spinning plate not only produces more uniform UHMWPE fibers but also reduces the occurrence of fiber breakages and improves the productivity of the process.

Good process productivity is obtained when the spinning plate contains at least 10 spin holes, preferably at least 50, more preferably at least 100, yet even more preferably at least 300, most preferably at least 500. Preferably the spinning plate contains at most 5000, more spreferably at most 3000, most preferably at most 1000 spin holes.

Suitable examples of spinning solvents include aliphatic and alicyclic hydrocarbons, e.g. octane, nonane, decane and paraffins, including isomers thereof; petroleum fractions; mineral oil; kerosene; aromatic hydrocarbons, e.g. toluene, xylene, and naphthalene, including hydrogenated derivatives thereof, e.g. decalin and tetralin; halogenated hydrocarbons, e.g. monochlorobenzene; and cycloalkanes or cycloalkenes, e.g. careen, fluorine, camphene, menthane, dipentene, naphthalene, acenaphtalene, methylcyclopentandien, tricyclodecane, 1,2,4,5-tetramethyl-1,4-cyclohexadiene, fluorenone, naphtindane, tetramethyl-p-benzodiquinone, ethylfuorene, fluoranthene and naphthenone. Also combinations of the above-enumerated spinning solvents may be used for gel spinning of UHMWPE, the combination of solvents being also referred to for simplicity as spinning solvent. In a preferred embodiment, the spinning solvent of choice is not volatile at room temperature, e.g. paraffin oil. It was also found that the process of the invention is especially advantageous for relatively volatile spinning solvents at room temperature, as for example decalin, tetralin and kerosene grades. In the most preferred embodiment the spinning solvent of choice is decalin.

The UHMWPE used in the process of the invention preferably has an intrinsic viscosity (IV), as measured on solution in decalin at 135°C of at least 5 dl/g, preferably at least 10 dl/g, more preferably at least 15 dl/g, most preferably at least 21 dl/g. Preferably, the IV is at most 40 dl/g, more preferably at most 30 dl/g, even more preferably at most 25 dl/g. A careful selection of the IV provides a balance between the processability of the UHMWPE solution that is to be spun and the mechanical properties of the obtained monofilaments.

Preferably, the UHMWPE is a linear polyethylene with less than one branch per 100 carbon atoms, and preferably less than one branch per 300 carbon atoms; a branch or side chain or chain branch usually containing at least 10 carbon atoms. It was observed that good results were obtained when linear polyethylenes were used. The linear polyethylene may further contain up to 5 mol% of one or more comonomers, such as alkenes like propylene, butene, pentene, 4-methylpentene or octane but also small amounts, generally less than 5 mass%, preferably less than 3 mass% of customary additives, e.g. anti-oxidants, thermal stabilizers, colorants, flow promoters, etc.

Preferably, the slurry contains at least 3 mass%, more preferably of at least 5 mass%, even more preferably at least 8 mass%, most preferably at least 10 mass% of UHMWPE. The slurry, preferably contains at most 30 mass%, more preferably at most 25 mass%, even more preferably at most 20 mass%, most preferably at most 15 mass% of UHMWPE. To improve processability, a lower concentration is preferred the higher the molar mass of the polyethylene is. Preferably, the slurry contains between 3 and 25 mass% UHMWPE for an UHMWPE with IV in the range 15-25 dl/g. However, to obtain the homogeneous inventive yarns, slurries with a higher concentration are preferably used. Therefore, good results were obtained with a slurry which contains between 5 and 20 mass% of an UHMWPE with IV in the range 15-25 dl/g.

Cooling, also known as quenching, the fluid UHMWPE fibers to form gel UHMWPE fibers, may be performed in a gas flow and/or in a liquid cooling bath. Preferably, the cooling bath contains a cooling liquid that is a non-solvent for UHMWPE and more preferably a cooling liquid that is not miscible with the solvent used for preparing the UHMWPE solution. Preferably, the cooling liquid flows substantially perpendicular to the fibers at least at the location where the fluid fibers enter the cooling bath, the advantage thereof being that drawing conditions in the cooling bath can be better defined and controlled.

The process according to the invention further comprises drawing the UHMWPE fibers before, during and/or after said removal of the solvent. Preferably, the fluid fibers are drawn with a drawing ratio of at least 2, more preferably at least 3, most preferably at least 4. The skilled person knows how to draw fluid fibers, e.g. by using a spinning plate with spinning holes provided with one or more contraction zones, by drawing if applicable in an air-gap existing between the face of the spinning plate issuing the fluid fibers and the region where the fluid fibers are cooled to form the gel fibers or alternatively, by a combination of both techniques. Examples of how to draw the fluid fibers are for example provided by WO 2005/066,401.

Preferably, the gel and/or solid fibers are drawn in drawing ovens in at least one drawing step with a drawing ratio of at least 4, more preferably at least 10, most preferably at least 20. More preferably, the drawing of solid fibers is performed in at least two steps, even more preferably in at least three steps. Preferably, each drawing step is carried out at a different temperature that is preferably chosen to achieve the desired drawing ratio without the occurrence of fiber breakage. Preferably, the drawing ovens are provided with a temperature gradient. If the drawing of the gel and/or solid fibers is performed in more than one step, the total draw ratio for said fibers is calculated by multiplying the draw ratios achieved for each individual drawing step.

The invention further relates to a gel-spun UHMWPE fiber obtainable with the process of the invention. It was observed that the inventive fiber has a decreased amount of the interface fraction as measured by ¹³C Nuclear Magnetic Resonance (NMR) spectroscopy.

It was also found that the inventive UHMWPE fiber also has a reduced amount of structure defects, in particular in the ordered fraction, as measured by ¹³C NMR spectroscopy also.

Preferably, the inventive UHMWPE fiber has a composition comprising an amount of the intermediate fraction of less than 25%, the intermediate fraction consisting of a part or parts of UHMWPE molecules located at the interface between oriented and non-oriented parts of the UHMWPE molecules. More preferably, said amount of the intermediate fraction is less than 15% from the inventive fiber's composition, even more preferably less than 10%, most preferably less than 5%.

An advantage of the inventive UHMWPE fiber is that its composition contains a higher amount of oriented fraction as compared with known gel-spun UHMWPE fibers. It was found that the process of the invention allowed the increase of said oriented fraction by transforming during the processing steps of at least part of the interface fraction into the oriented fraction, more in particular into an oriented fraction having a monoclinic type of crystalline structure. Hence, it was observed that the inventive fiber presents better physical and mechanical properties.

In a preferred embodiment of the invention, the composition of the inventive fiber comprises an amount of at least 65%, more preferably at least 75%, most preferably at least 85% of the oriented fraction as measured by ¹³C NMR spectroscopy, said oriented fraction consisting of an oriented part or parts of UHMWPE molecules, and wherein at least 3% of said oriented fraction has an oriented crystalline structure of monoclinic type. Preferably at least 5%, more preferably at least 6% of said oriented fraction has an oriented crystalline structure of monoclinic type as measured by ¹³C NMR spectroscopy.

Because of the versatility of the process according to the invention, gel-spun UHMWPE fibers can be obtained having a broader range of mechanical and physical properties. The usual gel-spinning processes produce fibers having a strict relation between their mechanical properties, in other words, if for example a fiber with a certain tensile strength needs to be manufactured, all the other mechanical parameters, e.g. modulus, elongation at break, creep, are substantially fixed and depending by the tensile strength. With the inventive process a larger window for the mechanical parameters of gel-spun UHMWPE fibers manufactured thereof can be achieved, even when one such parameter, e.g. tensile strength, is fixed. Without being bound to any explanation, the inventors attributed this advantage to the possibility of manufacturing gel-spun UHMWPE fibers having an increased value of the linewidth (Δυ_{1/2}) at half-height of the peak in a ¹³C NMR spectra corresponding to the oriented fraction having a monoclinic type of crystalline structure. It is also speculated that the increased value of Δυ_{1/2} is characteristic to an UHMWPE fiber with an ordered fraction having less defects such as for example chain-folds, loops, entanglements and kinks in the zigzag UHMWPE molecules.

Therefore, in a preferred embodiment, the inventive fiber has a value of the linewidth (Δυ_{1/2}) at half-height of the peak in a ¹³C NMR spectra corresponding to the oriented fraction having a monoclinic type of crystalline structure, of at least 60 Hz, more preferably at least 70 Hz, most preferably at least 80 Hz. The invention also relates to a gel-spun UHMWPE fiber having a value of the linewidth (Δυ_{1/2}) at half-height of the peak in a ¹³C NMR spectra as defined hereinabove.

Preferably, the modulus of the inventive fibers is at least 50 GPa, more preferably at least 100 GPa, even more preferably at least 150 GPa, most preferably at least 180 GPa.

Preferably, the strength of the inventive fibers is at least 1.2 GPa, more preferably at least 2 GPa, even more preferably at least 3 GPa, yet even more preferably at least 4 GPa, yet even more preferably at least 5 GPa, most preferably at least 5.5 GPa.

It was noticed that the inventive gel-spun UHMWPE fibers exhibit superior performances in various applications as for example composites, ropes and nets.

Therefore, the invention also relates to articles comprising the novel and inventive gel spun UHMWPE multifilament yarns of the invention. It was found that ropes and nets comprising the yarns of the invention show improved properties and are easier to be manufactured from the yarns of the invention. Therefore, the invention relates in particular to a rope and a net comprising the inventive yarns.

The invention also relates to medical devices comprising the yarns of the invention. In a preferred embodiment, the medical device is a cable or a suture.

Composite articles comprising the yarns of the invention also show improved properties. Therefore, the invention relates in particular to a composite article comprising the yarns in accordance with the embodiments of the invention. Preferably, the composite articles comprise networks of the inventive yarns. By network is meant that the monofilaments of said yarns are arranged in configurations of various types, e.g. a knitted or woven fabric, a non-woven fabric with a random or ordered orientation of the yarns, a parallel array arrangement also known as unidirectional UD arrangement, layered or formed into a fabric by any of a variety of conventional techniques. Preferably, said articles comprise at least one network of said yarns. More preferably, said articles comprise a plurality of networks of the inventive yarns, preferably UD networks and preferably the direction of the yarns in one layer being at an angle to the direction of the yarns in adjacent layers. Such networks of the inventive yarns can be comprised in cut resistant garments, e.g. gloves and also in anti-ballistic products, e.g. bullet-proof vests and helmets. Therefore, the invention also relates to the articles enumerated hereinabove comprising the yarns of the invention.

Hereafter the figure is explained.

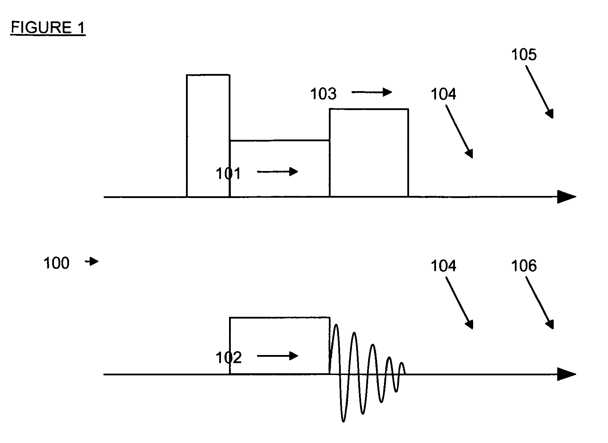

In figure 1, the time sequence of signals used to characterise the fibers of the invention is depicted

The invention will be further explained by the following examples and comparative experiments without being limited however thereto.

### TEST METHODS

- IV: the Intrinsic Viscosity is determined according to method PTC-179 (Hercules Inc. Rev. Apr. 29, 1982) at 135°C in decaline, the dissolution time being 16 hours, with DBPC as anti-oxidant in an amount of 2 g/I solution, by extrapolating the viscosity as measured at different concentrations to zero concentration;
- Side chains: the number of side chains in a UHPE sample is determined by FTIR on a 2 mm thick compression moulded film, by quantifying the absorption at 1375 cm⁻¹ using a calibration curve based on NMR measurements (as in e.g. EP 0269151);
- Solvent removal rate: the solvent removal rate is measured by determining the amount of solvent before and after the solvent removal and divide the change in weight by the time of the solvent removal. The amount of solvent in a sample is determined by weighing a sample as obtained before and after drying it for 24 hours under vacuum. The required temperature for the vacuum drying depends on the solvent used, and a suitable temperature may be determined by standard experiments. It was found that for decalin, drying under vacuum at 50°C was suitable and hence drying was carried out under these conditions;
- Tensile properties: tensile strength (or strength) is defined and determined on multifilament yarns as specified in ASTM D885M, using a nominal gauge length of the fiber of 500 mm, a crosshead speed of 50%/min and Instron 2714 clamps, of type Fibre Grip D5618C. On the basis of the measured stress-strain curve the modulus is determined as the gradient between 0.3 and 1% strain. For calculation of the modulus and strength, the tensile forces measured are divided by the titre, as determined by weighing 10 metres of fiber; values in GPa are calculated assuming a density of 0.97 g/cm³.
- Amount of the interface fraction: was measured by ¹³C solid-state NMR spectroscopy as follows:
   UHMWPE fibers were cut into pieces of 1.5 cm length with the help of a scalpel and introduced into a 4 mm diameter zirconia (ZrO₂) rotor such that the fibers were aligned with the rotor axis. The rotor was placed in a magic angle spinning (MAS) double-resonance Bruker NMR probehead, making in this way an angle θ of 54.7° (the so called *magic angle*) with respect to a permanent homogeneous magnetic field *B*₀.

The ¹³C solid-state NMR experiments were conducted using a Bruker DSX 500 spectrometer (*B*₀ = 11.75T) at a ¹³C resonance frequency of 125.8403936 MHz and a ¹H resonance frequency of 500.4430971 MHz. Measurements were made at ambient temperature (T = 295K) under moderate magic angle sample spinning (MAS) of 5 kHz that allows to record spectra free from inhomogeneous broadening.

The pulse sequence (100) vs. time used for recording the ¹³C NMR spectra is shown in figure 1. A cross-polarization pulse sequence scheme of ¹H channel (101) with ¹³C channel (102) was used to allow for a fast obtains of the magnetization of protons. The time dependent signal of ¹³C, hereafter called ¹³C NMR spectra, is recorded under proton decoupling to allow for ¹³C high-resolution spectra. Such technique is for example detailed in U.S. Patent 3,792,346; D.E. Demco, J. Tegenfeldt, J.S. Waugh, Phys. Rev. B11, 4133 (1975); S.R. Hartmann, E.L. Hahn, Phys. Rev. 128, 2042 (1962); and R.S. Thakur, N.D. Kurur, P.K. Madhu, Chem. Phys. 426, 459-463 (2006) (and references therein).

After a polarization time (i.e. repetition time) of 5 s, a 90° radiofrequency pulse (103) of 8.4 µs length at 7 dB power attenuation is applied on ¹H channel, followed by a contact pulse (104) time of 1.5 ms on both ¹H and ¹³C channels, using a power attenuation of 7 dB and 12 dB respectively. At the end of the contact pulse, the ¹³C NMR spectra which is a free induction decay (106) of the ¹³C, is detected under high power decoupling using broadband pulse sequence (105) TPPM20 (two-pulse phase modulation, with a phase difference of 20° between the subsequent 180° pulses employed). The power attenuation used on the ¹H channel for the 180° decoupling pulses is 4 dB and the length of the pulses is 14 µs. A time domain of 8192 points and a 10 µs dwell time between two consecutive points were used for the digital sampling of the recorded signal, giving a total acquisition time of 81.92 ms (i.e. the time needed for recording the ¹³C NMR spectra). The dead time of the spectrometer is on the order of 5.5 µs.

Before recording ¹³C NMR spectra for the investigated UHMWPE fibers, the spectra of a tetramethylsilane (TMS) liquid sample was recorded as detailed above and used to calibrate the spectrometer on the ¹³C signal of the TMS, i.e. the peak in the ¹³C spectrum of TMS has been fixed at 0 ppm.

After the acquisition of the ¹³C NMR spectra for all UHMWPE fibers investigated, a fast Fourier transform was applied to each of them. The transformed spectra obtained in this way were phase- and baseline-corrected using the spectrometer software XWINMR (Bruker Company).

The ¹³C NMR spectra were decomposed into four components corresponding to the crystalline (orthorhombic - around 32.7 ppm), monoclinic (around 34.1 ppm), intermediate (around 33 ppm), and amorphous (around 31-32 ppm) fractions.

A freely available decomposition program DmFit from D. Massiot et al., Magn. Reson. Chem. 40, 70-76 (2002), was used for the numerical deconvolution of the recorded spectra using the four components. All ¹³C lines were considered having a Lorentzian shape. After decomposition, the program gives the fraction content (%), linewidth at half-height (Hz), and position (ppm) of the deconvoluted NMR peaks.

### EXAMPLES AND COMPARATIVE EXPERIMENTS

### Examples 1

A 9 mass% slurry of a UHMWPE homopolymer in decaline was made, said UHMWPE having an IV of 20 dl/g as measured on solutions in decaline at 135°C. The UHMWPE had less than 0.3 groups per 1000 carbon atoms. The UHMWPE slurry was transformed into a homogeneous solution with a 25 mm twin screw extruder equipped with a gear-pump at a temperature setting of 180°C and extruded thereafter through a spinning plate having 64 spin holes into an air atmosphere containing also decaline and water vapors with a rate of about 1.5 g/min per hole. The density of the spin holes was 5 holes per cm². The spin holes covered the entire area of the spinning plate and had a circular cross-section, consisting of a gradual decrease in the initial diameter from 3 mm to 1 mm over a length of 0.17 cm and followed by a section of constant diameter with a ratio length L over diameter D of L/D=10, this specific geometry of the spinning holes introducing a drawing ratio of 9.

From the spinneret the fluid fibers entered a fluid stretching zone of 25 mm length and into a water bath, where the fluid fibers were taken-up at such rate that a drawing ratio of 20 was applied in the fluid stretching zone to the fluid fibers.

The fluid fibers were cooled in the water bath to form gel fibers, the water bath being kept at about 40°C and wherein a water flow was being provided with a flow rate of about 50 liters/hour perpendicular to the fibers entering the bath.

From the water bath, the gel fibers were taken-up into an oven at a temperature of 90°C at such rate that a drawing ratio of 4 was applied to the gel fibers while evaporating the decaline from the gel fibers to form solid fibers. The amount of residual decaline in the solid fibers was 12 mass%. The oven was provided with nozzles to create a jet of N₂ perpendicular to the fibers, the jet having a speed of 100 cm/sec. The evaporation rate was 0.01 (kg of decaline)/(sec × kg of UHMWPE).

The solid fibers subsequently entered an oven having a temperature gradient spanning from 90 at the entrance in the oven to 130°C at the exit. The solid fibers were drawn in the oven with a draw ratio of about 4.

The properties of the obtained fibers are shown in Table 1.

### Example 2

The experiment of Example 1 was repeated, with the difference that the evaporation rate was 0.05 (kg of decaline)/(sec × kg of UHMWPE).

### Example 3

The experiment of Example 1 was repeated, with the difference that the evaporation rate was 0.1 (kg of decaline)/(sec × kg of UHMWPE) and the density of the spin holes was 2 holes per cm².

### Example 4

The experiment of Example 1 was repeated, with the difference that the evaporation rate was 0.1 (kg of decaline)/(sec × kg of UHMWPE), the amount of the residual solvent in the solid fibers was 3.5% and the density of the spin holes was 1 hole per cm².

### Comparative Experiment A

The experiment of Example 1 was repeated, with the difference that the density of the spin holes was 8 holes per cm².

From the results achieved in the examples presented hereinbefore and summarized in Table 1, it can be clearly seen that the UHMWPE fibers of the invention a decreased amount of the interface fraction and furthermore, said fibers have a reduced amount of structural defects in their ordered fraction.

### Example 5

The experiment of Example 1 was repeated, with the difference that the density of the spin holes was 2 holes per cm² and that the draw ratio of the solid fibers was increased in each run from 3.0 to the maximum attainable draw ratio before break occurred. The results are shown in Table 2.

### Example 6

The experiment of Example 5 was repeated with the difference that the spin holes had a circular cross-section, consisting of a gradual decrease in the initial diameter from 2 mm to 0.8 mm.

### Comparative example B

The experiment of Example 1 was repeated, with the difference that the density of the spin holes was 8 holes per cm² and that the draw ratio of the solid fibers was increased in each run from 3.0 to the maximum attainable draw ratio before break occurred. The results are shown in Table 2.

### Comparative example C

The experiment of Comparative B was repeated with the difference that the spin holes had a circular cross-section, consisting of a gradual decrease in the initial diameter from 2 mm to 0.8 mm.

From Table 2 it can be seen that with the lower spin hole density, a higher drawability can be obtained. This also allow to obtain fibers with a higher strength and modulus. Furthermore, these properties allow a broader processing window with less susceptibility to yarn break.

**Table 1**

| *Sample* | *Amount intermediate fraction (*%*)* | *Amount ordered fraction (*%*)* | *Amount monoclinic fraction from the ordered fraction (*%*)* | Δυ_{1/2} (Hz) |
|---|---|---|---|---|
| Ex. 1 | 25 | 65 | 4 | 68 |
| Ex. 2 | 22.5 | 70 | 5 | 74 |
| Ex. 3 | 22 | 72 | 5.5 | 75 |
| Ex. 4 | 12 | 79 | 7 | 77 |
| Comp. Exp. A | 33 | 57 | 2.5 | 53 |

**Table 2**

| | **Example 5** | | **Example 6** | | **Comp. Example B** | | **Comp. Example C** | |
|---|---|---|---|---|---|---|---|---|
| D.R. | Tenacity | E-modulus | Tenacity | E-modulus | Tenacity | E-modulus | Tenacity | E-modulus |
| | [cN/dTex] | [cN/dTex] | [cN/dTex] | [cN/dTex] | [cN/dTex] | [cN/dTex] | [cN/dTex] | [cN/dTex] |
| 3,0 | 35.5 | 1110.4 | 35.7 | 1099.4 | 36.9 | 1141.0 | 36.4 | 1132.4 |
| 3,5 | 39.2 | 1250.2 | 38.3 | 1252,0 | 40.1 | 1301.1 | 38.2 | 1272.0 |
| 4,0 | 39.7 | 1334.5 | 40.5 | 1343.7 | 41.3 | 1394.7 | 37.9 | 1283.3 |
| 4,5 | 41.8 | 1446.9 | 43.9 | 1478.1 | 40.6 | 1461.5 | 40.1 | 1481.3 |
| 5,0 | 42.0 | 1504.6 | 42.3 | 1477.7 | Break | | Break | |
| 5,5 | 42.9 | 1546.8 | 43.8 | 1608.0 | | | | |
| 6,0 | Break | | 41.6 | 1586.4 | | | | |
| 6,5 | | | 39.8 | 1539.8 | | | | |
| 7,0 | | | Break | | | | | |

| | | | | | | | | |
|---|---|---|---|---|---|---|---|---|
| * D.R. = draw ratio | | | | | | | | |

## Claims

1. A gel-spinning process for producing UHMWPE fibers, said process comprising the steps of:
a) feeding a slurry containing UHMWPE and a spinning solvent to an extruder;
b) converting the slurry in the extruder into a solution of UHMWPE in the spinning solvent;
c) spinning fluid UHMWPE fibers by passing the solution of step b) through a spinning plate containing a plurality of spin holes;
d) cooling the fluid UHMWPE fibers to form gel UHMWPE fibers;
e) removing at least partly the spinning solvent from the gel UHMWPE fibers; and
f) drawing the UHMWPE fibers in at least one drawing step before, during and/or after removing the spin solvent;
**characterised in that** the spinning plate has at most 6 spin holes per cm².

2. The process of claim 1 wherein the spinning plate has at most 5 spin holes per cm², more preferably at most 2 spin holes per cm², and most preferably at most 1 spin hole per cm².

3. The process of any one of the preceding claims wherein the amount of residual spinning solvent after the solvent removal step e) is at most 15 mass% of the initial amount of solvent in the UHMWPE solution at step b).

4. The process of any one of the preceding claims wherein the spinning solvent is a volatile solvent and the solvent removal process at step e) is performed by evaporation in an oven at temperatures between 90 and 150°C.

5. The process of any one of the preceding claims wherein at step e) the solvent is removed from the gel UHMWPE fibers at a rate of at least 0.005 (kg of solvent)/(kg of UHMWPE × sec), preferably the solvent is removed from the gel UHMWPE fibers at a rate of at least 0.01 (kg of solvent)/(sec × kg of UHMWPE).

6. The process of any one of the preceding claims wherein the spinning solvent is decaline.

7. A gel-spun UHMWPE fiber having a composition comprising an amount of intermediate fraction of less than 25% as measured by ¹³C Nuclear Magnetic Resonance (NMR) spectroscopy, the intermediate fraction consisting of a part or parts of UHMWPE molecules located at the interface between oriented and non-oriented parts of the UHMWPE molecules, obtained by the process according to any of claims 1 to 6, wherein the percentage of intermediate fraction is obtained from the phase- and baseline-corrected ¹³C NMR spectra decomposed into four components corresponding to crystalline, around 32.7 ppm, monoclinic, around 34.1 ppm, intermediate, around 33 ppm, and amorphous, around 31-32 ppm, fractions.

8. The fiber of claim 7 having a composition comprising an amount of intermediate fraction of less than 5%.

9. The fiber of any one of the claims 7 or 8 having a composition further comprising an amount of at least 65% of the oriented fraction as measured by ¹³C NMR spectroscopy, said oriented fraction consisting of an oriented part or parts of UHMWPE molecules and wherein at least 3 % of said oriented fraction has an oriented crystalline structure of monoclinic type.

10. The fiber of any one of the claims 7 - 9 wherein the composition of the fiber comprises an amount of at least 85% of the oriented fraction.

11. The fiber of any one of the claims 7 - 10 having a value of a linewidth (Δυ_{1/2}) at half-height of the peak in a ¹³C NMR spectra corresponding to the oriented fraction having a monoclinic type of crystalline structure, of at least 60 Hz.

## Patentansprüche

1. Gelspinnverfahren zur Herstellung von UHMWPE-Fasern, umfassend die folgenden Schritte:
a) einem Extruder eine Aufschlämmung aus UHMWPE und einem Spinnlösungsmittel zuführen;
b) die Aufschlämmung im Extruder in eine Lösung von UHMWPE in dem Spinnlösungsmittel überführen,
c) flüssige UHMWPE-Fasern erspinnen, indem die Lösung aus Schritt b) über eine Spinnplatte mit mehreren Spinnlöchern geleitet wird,
d) die flüssigen UHMWPE-Fasern kühlen unter Erhalt von gelförmigen UHMWPE-Fasern,
e) aus den gelförmigen UHMWPE-Fasern das Spinnlösungsmittel wenigstens zum Teil abtrennen und
f) die UHMWPE-Fasern vor, bei und/oder nach der Abtrennung des Spinnlösungsmittels mindestens einfach verstrecken,
**dadurch gekennzeichnet, dass** die Spinnplatte je cm² über höchstens 6 Spinnlöcher verfügt.

2. Verfahren nach Anspruch 1, bei dem die Spinnplatte je cm² über höchstens 5 Spinnlöcher, besonders bevorzugt über höchstens 2 Spinnlöcher und ganz besonders bevorzugt über höchstens 1 Spinnloch verfügt.

3. Verfahren nach einem der vorhergehenden Ansprüche, bei dem die nach dem Spinnlösungsmittelabtrennschritt e) verbliebene Restmenge Spinnlösungsmittel bezogen auf die ursprüngliche Lösungsmittelmenge in der UHMWPE-Lösung gemäß Schritt b) höchstens 15 Gew.-% beträgt.

4. Verfahren nach einem der vorhergehenden Ansprüche, bei dem man als Spinnlösungsmittel ein leichtflüchtiges Lösungsmittel einsetzt, wobei die Lösungsmittelabtrennung gemäß Schritt e) durch Verdampfen in einem Ofen bei Temperaturen zwischen 90 und 150°C erfolgt.

5. Verfahren nach einem der vorhergehenden Ansprüche, bei dem die Lösungsmittelabtrennung aus den gelförmigen UHMWPE-Fasern gemäß Schritt e) mit mindestens 0,005 (kg Lösungsmittel)/(kg UHMWPE x sec), bevorzugt mit mindestens 0,01 (kg Lösungsmittel)/(sec x kg UHMWPE) erfolgt.

6. Verfahren nach einem der vorhergehenden Ansprüche, bei dem man als Spinnlösungsmittel Decalin einsetzt.

7. Gelgesponnene UHMWPE-Faser mit einer Zusammensetzung, umfassend einen ¹³C-NMR-spektroskopisch gemessenen Zwischenanteil von weniger als 25%, wobei der Zwischenanteil aus einem Teil oder Teilen von UHMWPE-Molekülen an der Grenzfläche zwischen orientierten und nicht orientierten Teilen der UHMWPE-Moleküle, erhalten nach dem Verfahren gemäß einem der Ansprüche 1 bis 6, besteht, wobei man zur Ermittlung des prozentuellen Zwischenanteils die bezüglich Phase und Grundlinie berichtigten ¹³C-NMR-Spektren in vier Komponenten zerlegt, die mit etwa 32,7 ppm dem kristallinen Anteil, mit etwa 34,1 ppm dem monoklinen Anteil, mit etwa 33 ppm dem Zwischenanteil und mit etwa 31-32 ppm dem amorphen Anteil entsprechen.

8. Faser nach Anspruch 7 mit einer Zusammensetzung, umfassend einen Zwischenanteil von weniger als 5%.

9. Faser nach einem der Ansprüche 7 oder 8 mit einer Zusammensetzung, ferner umfassend einen ¹³C-NMR-spektroskopisch gemessenen orientierten Anteil von mindestens 65%, wobei der orientierte Anteil aus einem orientierten Teil oder Teilen von UHMWPE-Molekülen besteht und wobei mindestens 3% des orientierten Anteils über eine orientierte Kristallstruktur des monoklinen Typs verfügen.

10. Faser nach einem der Ansprüche 7 - 9, bei der die Faserzusammensetzung einen orientierten Anteil von mindestens 85% umfasst.

11. Faser nach einem der Ansprüche 7 - 10 mit einer Linienbreite (Δυ_{1/2}) bei halber Höhe des Maximums im ¹³C-NMR-Spektrum entsprechend dem orientierten Anteil mit einem monoklinen Typ der Kristallstruktur von mindestens 60 Hz.

## Revendications

1. Procédé de filage à l'état de gel pour la production de fibres de polyéthylène à ultra-haute masse moléculaire (UHMWPE), ledit procédé consistant à :
a) introduire une suspension contenant de l'UHMWPE et un solvant de filage dans une extrudeuse ;
b) dans l'extrudeuse, transformer la suspension en une solution d'UHMWPE dans le solvant de filage ;
c) filer les fibres d'UHMWPE fluides en faisant passer la solution de l'étape b) à travers une plaque de filage contenant une pluralité d'orifices de filage ;
d) refroidir les fibres d'UHMWPE fluides pour former des fibres d'UHMWPE à l'état de gel ;
e) éliminer au moins en partie le solvant de filage des fibres d'UHMWPE à l'état de gel ; et
f) étirer les fibres d'UHMWPE dans au moins une étape d'étirage avant, pendant et/ou après l'élimination du solvant de filage ;
**caractérisé en ce que** la plaque de filage comporte au maximum 6 orifices de filage par cm².

2. Procédé selon la revendication 1, dans lequel la plaque de filage comporte au maximum 5 orifices de filage par cm², plus préférablement au maximum 2 orifices de filage par cm², et idéalement au maximum 1 orifice de filage par cm².

3. Procédé selon l'une quelconque des revendications précédentes, dans lequel la quantité de solvant de filage résiduel après l'étape e) d'élimination du solvant est au maximum de 15%mass de la quantité initiale de solvant dans la solution d'UHMWPE à l'étape b).

4. Procédé selon l'une quelconque des revendications précédentes, dans lequel le solvant de filage est un solvant volatil et le procédé d'élimination du solvant à l'étape e) est réalisé par évaporation dans un four à des températures de 90 °C à 150 °C.

5. Procédé selon l'une quelconque des revendications précédentes, dans lequel, à l'étape e), le solvant est éliminé des fibres d'UHMWPE à l'état de gel à un débit d'au moins 0,005 (kg de solvant)/(kg d'UHMWPE x sec), le solvant étant préférablement éliminé des fibres d'UHMWPE à l'état de gel à un débit d'au moins 0,01 (kg de solvant)/(kg d'UHMWPE x sec).

6. Procédé selon l'une quelconque des revendications précédentes, dans lequel le solvant de filage est la décaline.

7. Fibre d'UHMWPE à l'état de gel ayant une composition comprenant une quantité de fraction intermédiaire inférieure à 25 %, mesurée en utilisant un procédé de spectroscopie par résonance magnétique nucléaire (RMN) ¹³C, la fraction intermédiaire consistant en une ou plusieurs parties de molécules d'UHMWPE situées à l'interface entre les parties orientées et non orientées des molécules d'UHMWPE, obtenues par le procédé selon l'une quelconque des revendications 1 à 6, le pourcentage de la fraction intermédiaire étant obtenu à partir des spectres RMN ¹³C soumis à une correction de phase et de ligne de base, décomposés en quatre composantes correspondant à une fraction cristalline, environ 32,7 ppm, une fraction monoclinique, environ 34, ppm, une fraction intermédiaire, environ 33 ppm, et une fraction amorphe, environ 31-32 ppm.

8. Fibre selon la revendication 7, ayant une composition comprenant une quantité de fraction intermédiaire inférieure à 5 %.

9. Fibre selon l'une quelconque des revendications 7 ou 8, ayant une composition comprenant en outre une quantité d'au moins 65 % de la fraction orientée, mesurée par spectroscopie RMN ¹³C, ladite fraction orientée consistant en une ou plusieurs parties orientées de molécules d'UHMWPE et au moins 3 % de ladite fraction orientée ayant une structure cristalline orientée de type monoclinique.

10. Fibre selon l'une quelconque des revendications 7 à 9, la composition de la fibre comprenant une quantité d'au moins 85 % de la fraction orientée.

11. Fibre selon l'une quelconque des revendications 7 à 10, ayant une valeur d'une ligne de raie (Δυ_{½}), à mi-hauteur du pic dans des spectres RMN ¹³C correspondant à la fraction orientée ayant une structure cristalline de type monoclinique, d'au moins 60 Hz.
